# EUROPÄISCHE PATENTSCHRIFT

(11) **EP 0 452 265 B1**
(45) Veröffentlichungstag und Bekanntmachung des Hinweises auf die Patenterteilung: **18.12.1996**
(21) Anmeldenummer: 91810242.7
(22) Anmeldetag: 03.04.1991
(51) Int. Cl.: C08G 59/06

(54) **Verfahren zur Herstellung von Epoxidharzen**
Process for the preparation of epoxy resins
Procédé de préparation de résines époxydes

(30) Priorität: 12.04.1990 CH 1282/90
(43) Veröffentlichungstag der Anmeldung: 16.10.1991
(73) Patentinhaber: Ciba SC Holding AG, 4057 Basel (CH)
(72) Erfinder: Schaffner, Werner, CH-4125 Riehen (CH); Hadjistamov, Dimiter, Dr., CH-4125 Riehen (CH)

(56) Entgegenhaltungen:
- EP-A- 0 099 334
- FR-A- 2 394 567

## Beschreibung

Die vorliegende Erfindung betrifft ein Verfahren zur Herstellung von Epoxidharzen mit definiertem α-Glykolgehalt.

Epoxidharze mit α-Glykoleinheiten sind bekannt. So beschreibt die EP-A 99 334 ein Verfahren zur Herstellung solcher Epoxidharze mit höherem α-Glykolgehalt durch eine Nachbehandlung eines bereits hergestellten Epoxidharzes mit mehrwertigen Phenolen und Glycidol. Eine weitere Herstellungsmethode für α-glykolhaltige Epoxidharze besteht darin, dass man Epoxidharze einer partiellen Hydrolyse unterwirft, wobei aus der Epoxidgruppe ein Diol entsteht (vgl. Lee & Neville, "Handbook of Epoxy Resins", McGraw-Hill, New York, 1982, 5-39). Diese Herstellungsverfahren haben den Nachteil, dass erstens zuerst Epoxidharze als Ausgangsprodukte hergestellt werden müssen und zweitens sich der α-Glykolgehalt der Endprodukte nur schwer steuern lässt.

Es wurde nun überraschend ein Verfahren gefunden, das diese Nachteile nicht aufweist und zu Produkten mit definiertem α-Glykolgehalt führt, d.h., zu Epoxidharzen mit einem bestimmten, reproduzierbaren Glykolgehalt, der durch das erfindungsgemässe Verfahren also steuerbar ist. Es kann sich dabei sowohl um flüssige als auch um feste Epoxidharze handeln.

Die vorliegende Erfindung betrifft ein Verfahren zur Herstellung von Epoxidharzen mit definiertem Gehalt an α-Glykolgruppen, das dadurch gekennzeichnet ist, dass man bei der Umsetzung einer phenolischen Verbindung A, welche 2, 3 oder 4 phenolische Hydroxylgruppen aufweist, mit einem unsubstituierten oder durch C₁-C₄-Alkyl in 2- oder 3-Stellung substituierten Epihalogenhydrin mindestens 0,0085 und höchstens 0,04 Mol Glycidol pro Val Phenolverbindung A zugibt.

Als geeignete phenolische Verbindungen A mit 2 bis 4 phenolischen Hydroxylgruppen können alle bei der Herstellung von Epoxidharzen üblicherweise verwendeten Phenole eingesetzt werden.

Beispielsweise seien genannt: einkernige Diphenole (wie Resorcin) oder Triphenole (Phloroglucin), die auch substituiert sein können, Naphthaline mit 2, 3 oder 4 Hydroxylgruppen, wie 1,4-Dihydroxynaphthalin, Biphenyle und andere zweikernige aromatische Verbindungen, die eine Methylen-, Isopropyliden-, O-, SO₂-, S- oder NR-Brücke (R=H oder niederes Alkyl oder Phenyl) aufweisen und 2 bis 4 Hydroxylgruppen an den aromatischen kernen gebunden enthalen, wie insbesondere Bisphenol A, Bisphenol F oder Bis-phenol S; die Benzolkerne können auch Halogenatome aufweisen, wie Tetrabrombisphenol A. Weitere Verbindungen sind Novolake auf Phenol- oder Kresolbasis.

Bevorzugt werden als Verbindung A zweiwertige Phenole, besonders bevorzugt ist Bisphenol A.

Als unsubstituierte oder durch C₁-C₄-Alkyl in 2- oder 3-Stellung substituierte Epihalogenhydrine eignen sich, z.B. Epichlorhydrin, Epibromhydrin, Epijodhydrin oder die in 2- oder 3-Stellung durch C₁-C₄-Alkyl substituierte Epihalogenhydrine, wie beispielsweise 2-Methylepichlorhydrin.

Bevorzugt werden Epichlorhydrin oder 2-Methylepichlorhydrin, insbesondere jedoch Epichlorhydrin verwendet.

Die Umsetzung kann in Gegenwart oder in Abwesenheit eines katalysators durchgeführt werden. Vorzugsweise wird ein katalysator eingesetzt.

Als geeignete katalysatoren kommen die folgenden in Betracht:

Nukleophile katalysatoren, wie sie aus der FR-A-2,063,025 bekannt sind, wie beispielsweise Imidazole, Benzimidazole, Imidazoline, Dihydropyrimidine, Tetrahydropyrimidine, Dihydrochinazoline, insbesondere Methyl- oder Phenylimidazol, vorzugsweise 2-Phenylimidazol.

Als katalysatoren können auch eingesetzt werden Alkali- oder Erdalkalimetallhydroxide, vorzugsweise Natriumhydroxid, sowie Alkali- oder Erdalkalimetallalkoholate der Formel X^{n⊕} (OR^{⊖})ₙ, worin X das Alkali- oder Erdalkalimetallion ist, R C₁-C₁₂-Alkyl, besonders C₁-C₄-Alkyl, ist, und n die Wertigkeit des Alkali- oder Erdalkalimetallions ist; Natriummethylat ist besonders bevorzugt. Weiterhin können als katalysatoren erfindungsgemäss quarternäre Ammoniumsalze, vorzugsweise Hydroxide oder Halogenide der Formel 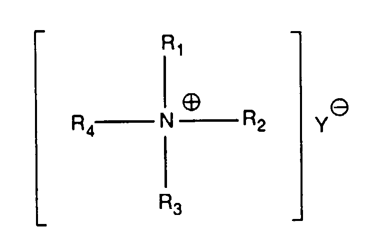 verwendet werden, worin R₁, R₂ und R₃ unabhängig voneinander je unsubstituiertes oder gegebenenfalls durch OH-Gruppen substituiertes Alkyl mit 1-16 C-Atomen, und R₄ Alkyl mit 1-16 C-Atomen, Phenyl oder Benzyl darstellen, und Y Hydroxyl oder Halogen ist. Solche katalysatoren werden z.B. in der GB-B-1 364 804 beschrieben. Bevorzugt werden Tetralkylammoniumsalze, besonders Tetramethylammoniumsalze, eingesetzt. Schliesslich können als katalysatoren auch Phosphoniumhalogenide der Formel 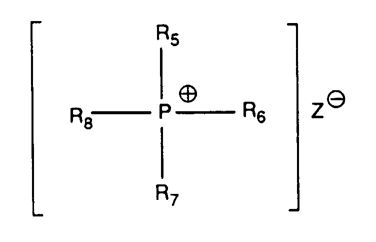 verwendet werden, worin Z ein Halogenatom, wie Chlor, Brom oder Jod ist, und R₅, R₆, R₇ und R₈ unabhängig voneinander einwertige Kohlenwasserstoffgruppen sind. R₅, R₆ und R₇ sind vorzugsweise Alkyl, Cycloalkyl, Aryl, Alkaryl und Arylalkyl mit je höchstens 25 C-Atomen, besonders bevorzugt mit je bis zu 18 C-Atomen, wie z.B. Phenyl, Butyl, Octyl, Lauryl, Hexadecyl oder Cyclohexyl. R₈ ist vorzugsweise eine Alkylgruppe mit 1-10 C-Atomen, insbesondere 1-4 C-Atomen, wie z.B. Methyl, Ethyl, Propyl, n-Butyl, sec.- Butyl und n-Decyl. Einige Beispiele für die Phosphoniumhalogenide als Katalysatoren sind Methyltriphenylphosphoniumjodid, Ethyltriphenylphosphoniumjodid, Propyltriphenylphosphoniumjodid, n-Butyltriphenylphosphoniumjodid, n-Decyltriphenylphosphoniumjodid, Ethyltributylphosphoniumjodid, Ethyltriphenylphosphoniumchlorid und Ethyltriphenylphosphoniumbromid, wobei C₁-C₄-Alkyltriphenylphosphoniumjodide besonders bevorzugt sind. Solche Katalysatoren werden z.B. in der GB-B-1 204 760 beschrieben. Als Katalysatoren kommen auch Phosphorverbindungen in Frage, die in den folgenden Patentschriften beschrieben sind: US 3 547 881, US 4 048 141, US 4 132 706, GB 1 398 197 und GB 1 485 345.

Der am meisten bevorzugte Katalysator ist 2-Phenylimidazol.

Die angewendeten Mengen des Katalysators können in einem breiten Bereich variiert werden, und sind vorzugsweise zwischen 0,0001 und 10 Gew.%, besonders bevorzugt zwischen 0,0002 und 5 Gew.%, ganz besonders bevorzugt zwischen 0,0005 und 1 Gew.%, und insbesondere bevorzugt zwischen 0,005 und 1 Gew.%, bezogen auf die Gesamtmenge der Edukte, im Reaktionsgemisch vorhanden.

Die Umsetzung kann ohne oder in einem Lösungsmittel, Lösungsmittelgemisch oder dessen Gemisch mit Wasser durchgeführt werden, wobei 5-95%ige Lösungen der Reaktionsteilnehmer zweckmässig sind. Als Lösungsmittel kommen z.B. Toluol, Xylol, Methylethylketon, Methylisobutylketon, Butylacetat, Dioxan, Isopropanol oder 2-Ethoxyethanol, insbesondere Isopropanol, in Betracht. Vorzugsweise kann Epichlorhydrin als Lösungsmittel dienen.

Die Reaktionstemperaturen liegen im allgemeinen zwischen 20 und 200°C, bevorzugt zwischen 40 und 120°C.

Bei Verwendung eines Katalysators muss dieser langsam zugegeben werden, um ein zu starkes Ansteigen der Temperatur des exotherm reagierenden Gemisches zu vermeiden. Vorzugsweise arbeitet man unter Stickstoff. Die Reaktionszeit beträgt von im allgemeinen einer bis einige Stunden.

Glycidol kann auch in Form anderer, unter den vorliegenden Reaktionsbedingungen in situ Glycidol bildenden Verbindungen, wie z.B. 3-Chlor-1,2-propandiol, 2-Chlor-1,3-propandiol, 3-Brom-1,2-propandiol oder 2-Brom-1,3-propandiol, zugegeben werden. Bevorzugt wird Glycidol in Form von 3-Chlor-1,2-propandiol zugegeben.

Dabei ist zu berücksichtigen, dass Glycidol etwa stöchiometrisch umgesetzt wird, während z.B. 3-Chlor-1,2-propandiol nur ungefähr zur Hälfte der stöchiometrischen Menge eingebaut wird. Daher beträgt im Falle von 3-Chlor-1,2-propandiol als Glycidol bildende Verbindung die Mindestmenge die zweifache stöchiometrische Menge d.h. 0,017 Mol/Val phenolische Verbindung A.

Die durch das erfindungsgemässe Verfahren hergestellen Produkte enthalten einen definierten Gehalt an α-Glykolgruppen. Dieser Gehalt hängt von der Menge des eingesetzten Glycidols beziehungsweise z.B. des 3-Chlor-1,2-propandiols ab. Dabei ist zu berücksichtigen, dass bei der Umsetzung einer phenolischen Verbindung A mit einem Epihalogenhydrin, wie von N.S. Enikolopyan et al. in J. Polym. Sci., Chem. Ed. 20, (1982) pp. 1231-1245 beschrieben, unabhängig von einer Zugabe von Glycidol, im resultierenden Produkt stets ein gewisser Gehalt an α-Glykolgruppen entsteht, beispielsweise von etwa 0,1 bis etwa 0,2 Aequivalenten/kg, der aber verschieden hoch ausfallen kann, also schwankt. Durch die Zugabe von Glycidol erhält man einen höheren, erwünschten Gehalt an α-Glykolgruppen, dieser ist durch das erfindungsgemässe Verfahren aber vorausbestimmbar, also definierbar.

Bevorzugt sind nach dem erfindungsgemässen Verfahren hergestellte Epoxidharze mit einem Gehalt an α-Glykolgruppen von mindestens 0,2 Aequivaltenten/kg, besonders bevorzugt jedoch mit mehr als 0,3 Aequivalenten/kg.

Die nach dem erfindungsgemässen Verfahren hergestellten Produkte lassen sich durch Vernetzen mit üblichen Härtungsmitteln für Epoxidharze, wie z.B. Polycarbonsäureanhydride, Polyamine oder mehrwertige Phenole härten, wobei die gehärteten Endprodukte gute Flexibilität aufweisen.

Die Produkte können für den Oberflächenschutz, zur Herstellung von Giesslingen, insbesondere auf dem Elektrogebiet, von Prepregs und Laminaten verwendet werden. Sie können auch auf dem Gebiet der Photopolymerisation und als Lötstop- und Isolationslacke verwendet werden.

Beispiel 1: 228 g Bisphenol A und 610 g Epichlorhydrin werden in einem 1,5 Liter-Reaktionskolben mit Untenauslauf vorgelegt. Es werden nacheinander 17,5 g 3-Chlor-1,2-propandiol, 130 g Isopropanol und 25 g Wasser zugegeben. Die Temperatur wird auf 68°C erhöht und die Reaktionsmasse mit 450 UpM gerührt. Unter leichtem Stickstoffstrom dosiert man 12 g 50%iges wässriges NaOH in 10 Minuten zu und lässt 5 Minuten ausreagieren. In weiteren 30 Minuten werden dann 12,5 g 50%iges wässriges NaOH zudosiert und anschliessend 25 g 50%iges wässriges NaOH in den nächsten 15 Minuten. Gleich danach werden in 15 Minuten 90 g wässriges 50%iges NaOH bei jeweils 69°C Innentemperatur zugegeben. Nach der Zugabe wird noch 5 Minuten weitergerührt und anschliessend 292 g kaltes Waser zugegeben, dann 5 Minuten gerührt und dann zur Phasentrennung stehengelassen. Nach 15-30 Minuten können ungefähr 500 g Solelösung unten abgetrennt werden. Zur organischen Phase im Reaktor werden 34,6 g 50%iges wässriges NaOH in 10 Minuten bei 450 UpM zudosiert und bei 69°C 5 Minuten nachgerührt. Jetzt auf eine Temperatur von unter 45°C gekühlt und 104 g Wasser zugegeben; nach 5 Minuten Rühren wird zur Phasentrennung stehengelassen. Nach 15 Minuten können ungefähr 160 g wässrige Solelösung unten abgetrennt werden. Die organische Phase wird in einem Rundkolben am Rotationsverdampfer am Vakuum bei 130°C bis zur Gewichtskonstanz getrocknet. Das Epichlorhydrin-Isopropanol-Destillat kann nach dem Analysieren für eine nächste Umsetzung wieder eingesetzt werden.

Der Harzrückstand beträgt nahezu 100 % der Theorie, bezogen auf Bisphenol A.

Das Harz wird heiss in einer Filterpresse der Firma Seitz, Schweiz über ein Filter der Porengrösse Supra 200 filtriert.

Der Epoxidgehalt beträgt 5,28 Aequivalente/kg. Der Anteil an verseifbarem Chlor liegt bei 0,11 %, der an α-Glykolgruppen bei 0,36 Aequivalenten/kg. Die Viskosität bei 25°C beträgt 11300 mPas.

## Patentansprüche

1. Verfahren zur Herstellung von Epoxidharzen mit einem definierten Gehalt an α-Glykolgruppen, dadurch gekennzeichnet, dass man bei der Umsetzung einer phenolischen Verbindung A, welche 2, 3 oder 4 phenolische Hydroxylgruppen aufweist, mit einem unsubstituierten oder durch C₁-C₄-Alkyl in 2- oder 3-Stellung substituierten Epihalogenhydrin mindestens 0,0085 und höschstens 0,04 Mol Glycidol pro Val Phenolverbindung A zugibt.

2. Verfahren gemäss Anspruch 1, dadurch gekennzeichnet, dass man Glycidol in Form von 3-Chlor-1,2-propandiol zugibt, wobei man mindestens 0,017 Mol 3-Chlor-1,2-propandiol pro Val Phenolverbindung A zugibt.

3. Verfahren gemäss Anspruch 1, dadurch gekennzeichnet, dass die Umsetzung in Gegenwart eines Katalysators durchgeführt wird.

4. Verfahren gemäss Anspruch 1, dadurch gekennzeichnet, dass man die Umsetzung bei Temperaturen zwischen 20 und 200°C vornimmt.

5. Verfahren gemäss Anspruch 4, dadurch gekennzeichnet, dass man die Umsetzung bei Temperaturen von 40 bis 120°C durchführt.

6. Verfahren gemäss Anspruch 1, dadurch gekennzeichnet, dass man die Umsetzung mit Zusatz eines Lösungsmittels duchführt.

7. Verfahren gemäss Anspruch 3, dadurch gekennzeichnet, dass man die Umsetzung in Gegenwart eines nukleophilen Katalysators durchführt.

8. Verfahren gemäss Anspruch 7, dadurch gekennzeichnet, dass der Katalysator Natriumhydroxid, Natriummethylat, ein quaternäres Phosphonium- oder Ammonium-Salz ist.

9. Verfahren gemäss Anspruch 7, dadurch gekennzeichnet, dass der Katalysator 2-Phenylimidazol ist.

10. Verfahren gemäss Anspruch 1, dadurch gekennzeichnet, dass man als Verbindung A ein zweiwertiges Phenol verwendet.

## Claims

1. A process for the preparation of epoxy resins having a defined content of α-glycol groups, which comprises adding at least 0.0085 and not more than 0.04 mol of glycidol per equivalent of a phenolic compound A which contains 2, 3 or 4 phenolic hydroxyl groups during the reaction of phenol compound A with an epihalohydrin which is unsubstituted or substituted in 2- or 3-position by C₁-C₄alkyl.

2. A process according to claim 1, wherein glycidol is added in the form of 3-chloro-1,2-propanediol, using at least 0.017 mol of 3-chloro-1,2-propanediol per equivalent of phenol compound A.

3. A process according to claim 1, wherein the reaction is carried out in the presence of a catalyst.

4. A process according to claim 1, wherein the reaction is carried out at temperatures between 20 and 200°C.

5. A process according to claim 4, wherein the reaction is carried out at temperatures from 40 to 120°C.

6. A process according to claim 1, wherein the reaction is carried out with the addition of a solvent.

7. A process according to claim 3, wherein the reaction is carried out in the presence of a nucleophilic catalyst.

8. A process according to claim 7, wherein the catalyst is sodium hydroxide, sodium methylate or a quaternary phosphonium or ammonium salt.

9. A process according to claim 7, wherein the catalyst is 2-phenylimidazole.

10. A process according to claim 1, wherein compound A is a dihydric phenol.

## Revendications

1. Procédé pour la préparation de résines époxydes ayant une teneur définie en groupes α-glycol, caractérisé en ce que l'on ajoute au cours de la réaction d'un composé phénolique A, qui présente 2, 3 ou 4 groupes hydroxyle de phénol, avec une épihalogénohydrine non substituée ou substituée par alkyle en C₁-C₄ en position 2 ou 3, au moins 0,0085 mole et tout au plus 0,04 mole de glycidol par équivalent du composé phénolique A.

2. Procédé selon la revendication 1, caractérisé en ce que l'on ajoute le glycidol sous forme de 3-chloro-1,2-propanediol, en ajoutant au moins 0,017 mole de 3-chloro-1,2-propanediol par équivalent de composé phénolique A.

3. Procédé selon la revendication 1, caractérisé en ce que l'on met en oeuvre la réaction en présence d'un catalyseur.

4. Procédé selon la revendication 1, caractérisé en ce que l'on effectue la réaction à une température comprise entre 20 et 200 °C.

5. Procédé selon la revendication 4, caractérisé en ce que l'on met en oeuvre la réaction à des températures de 40 à 120 °C.

6. Procédé selon la revendication 1, caractérisé en ce que l'on met en oeuvre la réaction en ajoutant un solvant.

7. Procédé selon la revendication 3, caractérisé en ce que l'on met en oeuvre la réaction en présence d'un catalyseur nucléophile.

8. Procédé selon la revendication 7, caractérisé en ce que le catalyseur est l'hydroxyde de sodium, le méthylate de sodium, un sel de phosphonium ou d'ammonium quaternaire.

9. Procédé selon la revendication 7, caractérisé en ce que le catalyseur est le 2-phénylimidazole.

10. Procédé selon la revendication 1, caractérisé en ce que l'on utilise en tant que composé A un phénol bivalent.
